# EUROPÄISCHE PATENTSCHRIFT

(11) **EP 0 876 902 B1**
(45) Veröffentlichungstag und Bekanntmachung des Hinweises auf die Patenterteilung: **09.11.2005**
(21) Anmeldenummer: 98104454.8
(22) Anmeldetag: 12.03.1998
(51) Int. Cl.: B30B 9/30, A01F 15/08, B30B 11/22

(54) **Steuerung zur Regelung der Presskraft einer Grossballenpresse**
Control for regulating the pressing force in a large baling press
Commande pour réguler la force de compression dans une presse pour grande balles

(30) Priorität: 05.05.1997 DE 19718579
(43) Veröffentlichungstag der Anmeldung: 11.11.1998
(73) Patentinhaber: Usines Claas France S.A., 57140 St. Remy / Woippy (FR)
(72) Erfinder: Mesmer, Denis, 57320 Bouzonville (FR)
(74) Vertreter: Kus, Sascha

(56) Entgegenhaltungen:
- EP-A- 0 235 397
- EP-A- 0 382 263
- EP-A- 0 655 190
- WO-A-84/03252
- DE-A- 2 208 945
- FR-A- 2 578 550

## Beschreibung

Regelungen der Presskräfte in einer Brikettenpresse sind aus WO-A-84 03 252 und FR-A-2 578 550 bekannt.

Die Anmeldung betrifft eine Steuerung zur Regelung der Preßkraft einer Großballenpresse, bestehend aus einer Aufnahmevorrichtung, einem Zuführkanal, einer Preßkammer mit einem Preßkolben sowie seitlichen Begrenzungen der Preßkammer, hydraulischen Stellmitteln zur Veränderung der Stellung zumindest einer seitlichen Begrenzung, sowie zugehörigen Sensoren und Kontrolleinrichtungen, die die Stellung der seitlichen Begrenzung regeln.

Eine solche Steuerungsvorrichtung ist aus der EP 0 235 397 bekannt. Nachteil der dort beschriebenen Lösung ist, daß die Vorrichtung zur Steuerung des Preßdrucks nicht fernbedienbar ist. Die Druckmessung über zumindest einen Hydraulikzylinder als Sensormittel ist kostenaufwendig. Zudem arbeitet die passive Reaktion des Hydraulikzylinders verleichsweise langsam und ist nicht geeignet für eine schnelle Regelung des Preßdrucks. In der EP 0 382 263 sind Sensormittel beschrieben, die am Preßkolben angebracht sind. Diese Sensormittel liefern nur dann einen mittelbaren Druckwert, wenn der Preßkolben an seinem hinteren Totpunkt angelangt ist. Die übrige Laufzeit können die Sensormittel keine Informationen über den Druck im Preßkanal sammeln, sodaß diese Sensoren nicht den Einfluß der erntegutabhängigen Reexpansion des Erntegutes auf den Preßdruck messen können. Diese Sensoreinrichtung liefert dementsprechend nur ungenaue Meßwerte.

Es ist Aufgabe der vorliegenden Erfindung, diese Nachteile zu überwinden.

Erfindungsgemäß besteht die Steuervorrichtung aus einer elektronischen Steuervorrichtung mit einem Terminal zur Vorgabe des Drucksollwertes im hydraulischen Stellmittel, einem Sensor zur Messung des Ist-Drucks im hydraulischen Stellmittel, sowie einem PID-Regler in der elektronischen Steuervorrichtung, der die Soll- und Ist-Druckwerte im hydraulischen Stellmittel miteinander vergleicht und bei Abweichungen ein Regelsignal an ein Hydraulikventil zur Verringerung der Abweichung ausgibt. Diese Anordnung erlaubt es dem Bediener der Großballenpresse, beispielsweise vom Schleppersitz aus bequem den Preßdruck der Großballenpresse einzustellen bzw. zu verändern. Die Lösung ist kostengünstig und kann mit billigen Sensormitteln realisiert werden. Die erfindungsgemäße Steuervorrichtung arbeit mit genauen Werten, die direkt im hydraulischen Stellmittel abfragbar sind und schnell ausgewertet werden können. Weitere vorteilhafte Ausgestaltungen der Erfindung ergeben sich aus den Unteransprüchen.

Die Erfindung wird im folgenden anhand eines Ausführungsbeispiels näher erläutert. Es zeigen:
- Figur 1: eine Großballenpresse in der Seitenansicht,
- Figur 2: eine schematische Darstellung der erfindungsgemäßen Steuerungsvorrichtung,
- Figur 3: eine schematische Darstellung des Hydraulikkreislaufs.

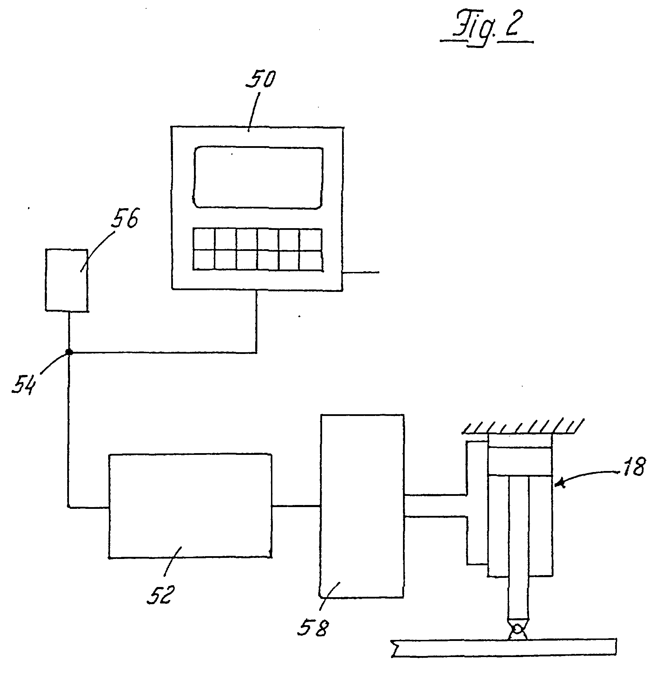

Figur 1 zeigt eine schematische Darstellung einer Großballenpresse 2 in der Seitenansicht. Über die Aufnahmevorrichtung 4 wird Erntegut vom Boden aufgenommen, in den Zuführkanal 6 abgegeben, dort von einem Förderer 8 in die Preßkammer 10 weiterbefördert und vom Preßkolben 12 gegen den sich bereits in der Preßkammer 10 befindlichen Erntegutstrang 15 gepreßt. Neben der Preßkraft, die der Preßkolben 12 gegen den Erntegutstrang 15 erzeugt, ist zumindest eine der seitlichen Begrenzungen der Preßkammer 10 schwenkbeweglich angeordnet. Ein auf einem Preßring 16 angeordneter Hydraulikzylinder 18 kann durch Ausfahren die mit ihm verbundene schwenkbewegliche seitliche Begrenzung der Preßkammer 10 so bewegen, daß dadurch die Querschnittsfläche der Preßkammer 10 in Förderrichtung gesehen veringert wird. Durch die Verengung der Querschnittsfläche der Preßkammer 10 wird ein zusätzlicher Preßdruck auf den in der Preßkammer 10 befindlichen Erntegutstrang 15 ausgeübt. Erreicht der Erntegutstrang 15 eine vorgegebene Länge, wird die Bindeeinrichtung 14 betätigt und dadurch ein fertiger Ballen gebunden. Der fertige Ballen wird über eine Abgaberutsche auf dem Feld abgelegt.

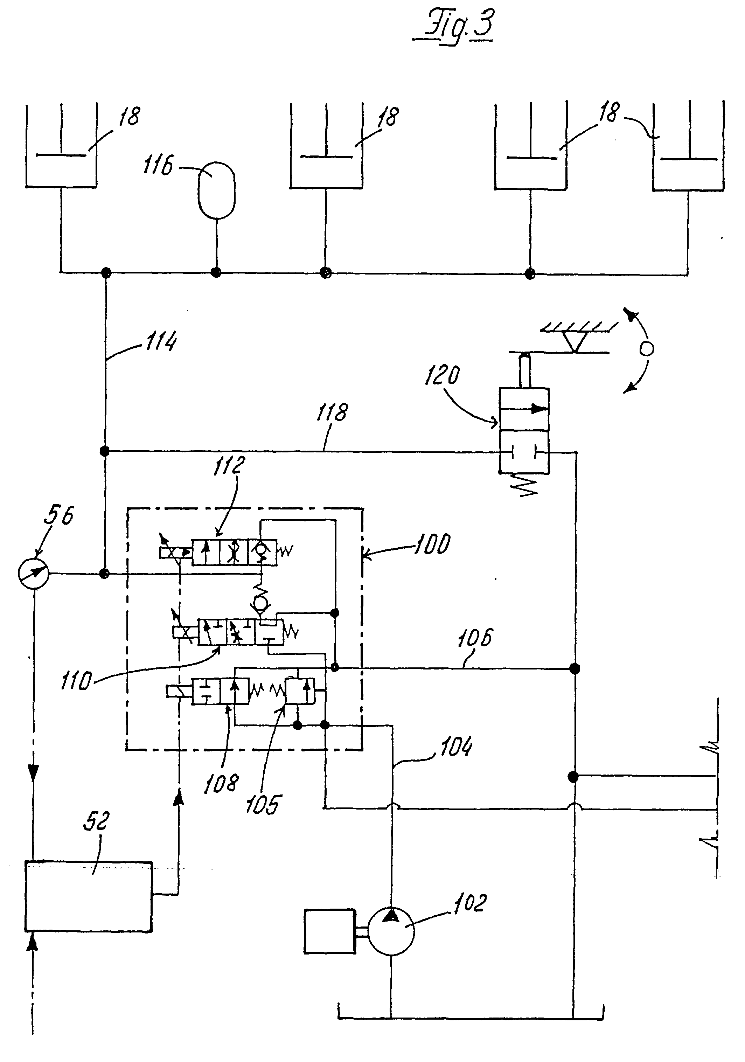

Figur 2 zeigt schematisch eine erfindungsgemäße Ausgestaltung einer Steuervorrichtung. Über ein Terminal 50 kann ein Druck-Sollwert im hydraulischen Stellmittel 18 eingegeben werden, der über eine Leitung oder telemetrisch an die elektronische Steuervorrichtung 52 übermittelt wird. An einem Eingangsknoten 54 wird der Druck-Sollwert mit einem von einem Sensor 56 gemessenen und übermittelten Druck-Istwert im hydraulischen Stellmittel 18 verglichen. Stimmen die miteinander verglichenen Werte miteinander überein, so ist der Eingangswert in die elektronische Steuervorrichtung 52 = 0. Ergibt sich jedoch eine positive oder negative Abweichung, so wird diese Abweichung mit einem dem Maß der Abweichung entsprechenden Wert in die elektronische Steuervorrichtung 52 übermittelt und dort vom PID-Regler zu einem Steuersignal aufbereitet. Die Aufbereitung im PID-Regler kann mit elektronischen Komponenten (Widerständen, Transistoren etc.) oder durch eine geeignete Software erfolgen. Im PID-Regler wird der Wert für die Abweichung mit einem proportionalen Faktor multipliziert, mit einem Integral und bei hohen Wertspitzen mit einem Differential verrechnet. Die aufbereiteten Werte werden zusammengeführt, zu einem Ausgangssignal aufgearbeitet und an das hydraulische Steuerventil 58 als Stellgröße abgegeben. Bevorzugt gibt die elektronische Steuervorrichtung 52 die Steuersignale als Pulsweitensignale zu Steuerung eines hydraulische Steuerventil 58 ab. Durch die von hydraulische Steuerventil 58 gesteuerten Ströme des Hydraulikmittels wird das hydraulische Stellmittel 18 so bewegt, daß sich der Querschnitt der Preßkammer 10 vergrößert oder verkleinert. Die Auslegung der einzelnen PID-Regelgrößen dürfte dem Fachmann keine großen Schwierigkeiten bereiten. Die Auslegung muß so erfolgen, daß Abweichungen in einem tolerablen Zeitraum korrigiert werden. Ein solcher Zeitraum kann etwa 10 bis 20 Sekunden dauern, aber je nach Anforderungen auch kürzer oder länger. Bei der Auslegung der PID-Regler ist auch die Förderleistung der Hydraulikanlage sowie das Arbeitsvolumen der hydraulischen Stellmittel zu beachten.

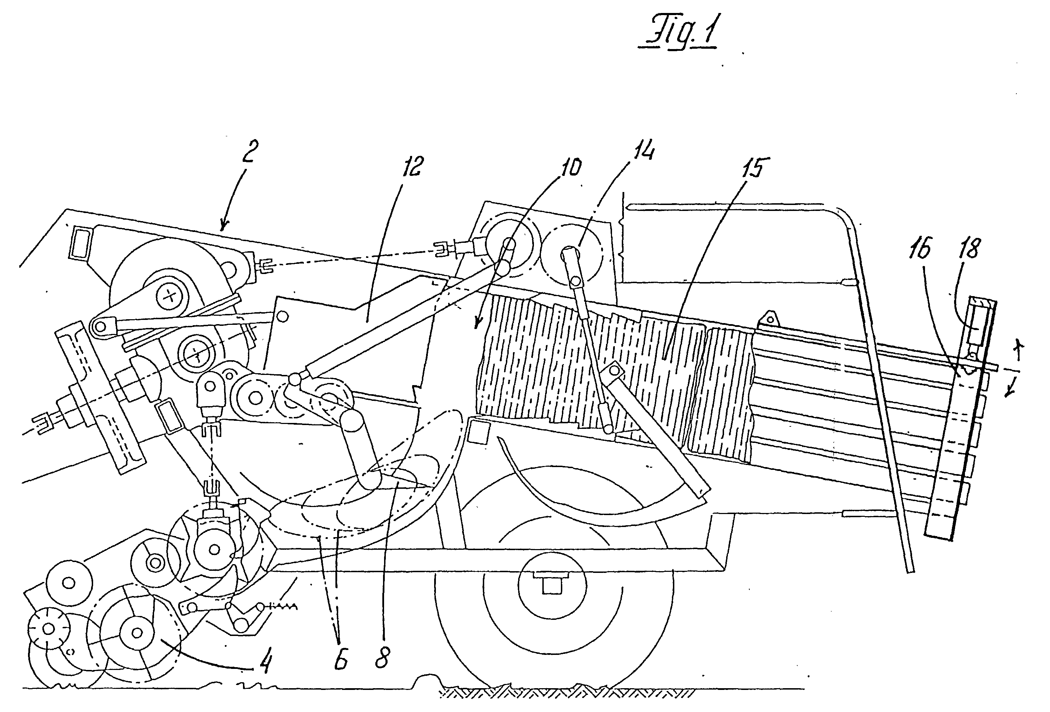

In Figur 3 ist der Hydraulikkreislauf der erfindungsgemäßen Steuervorrichtung dargestellt. Ein Ventilblock 100 wird von einer Pumpe 102 mit Hydraulikflüssigkeit versorgt. An die Zulaufleitung 104 ist ein Druckbegrenzungsventil 105 angeschlossen, das auf einen Höchstdruck von beispielsweise 220 bar eingestellt werden kann. Bei Überschreiten dieses Druckwertes läßt das Druckbegrenzungsventil 105 das überschüssige Hydraulikmittel über die Leitung 106 in den Tank ab. Das Umlauf-Sperrventil 108 bewirkt den drucklosen Umlauf des Hydraulikmittels, solange die übrigen Ventile nicht geschaltet sind. Wenn das Ventil 110 geschaltet wird, so sperrt das Umlauf-Sperrventil 108 den drucklosen Umlauf und ermöglicht so den Zulauf von Hydraulikmittel zum Ventil 110. Wird das Ventil 110 geschaltet, so erhöht sich der Druck in den hydraulischen Stellmitteln 18, von denen hier 4 beispielhaft dargestellt sind, über die Zu- und Ablaufleitung 114. Wird das Ventil 112 geschaltet, so wird Hydraulikmittel über die Leitung 106 an den Tank abgelassen, und der Hydraulikdruck in den hydraulischen Stellmitteln 18 verringert sich. Um eine stoßartige Arbeitsweise der Steuerung abzudämpfen, ist an die Leitung 114 ein mit beispielsweise 30 bar vorgespannter Druckspeicher 116 angeschlossen. Ebenfalls an die Leitung 114 ist der Drucksensor 56 angeschlossen, der den ermittelten Druck-Istwert an die elektronische Steuervorrichtung 52 weiterleitet. Über die Leitung 118 ist die Leitung 114 mit einem Sicherheitsventil 120 verbunden, das bei Durchbiegung des nicht dargesellten Stützbalkens, an denen die hydraulischen Stellmittel 18 gelagert sind, über einen Hebel mechanisch betätigt wird und bei Betätigung Hydraulikmittel über die Leitung 106 an den Tank abläßt. Die Ventile 108, 110 und 112 bekommen von der elektronischen Steuervorrichtung 52 Stellsignale, die die Schaltstellung der Ventile regeln. Die Ventile 108, 110 und 112 sind Magnetventile, die als Proportionalventile mit einem konstanten Strom oder anderenfalls pulsweitenmoduliert angesteuert werden.

Die Erläuterung der Erfindung anhand des Ausführungsbeispiels ist nicht auf diese Ausführungsform beschränkt. Dem Fachmann bereitet es keinerlei Schwierigkeiten, die erfinderische Idee für andere Anwendungen abzuwandeln oder diese seiner Ausführung anzupassen.

## Patentansprüche

1. Steuerung zur Regelung der Preßkraft einer Großballenpresse , bestehend aus einer Aufnahmevorrichtung, einem Zuführkanal, einer Preßkammer mit einem Preßkolben und seitlichen Begrenzungen der Preßkammer, hydraulischen Stellmitteln zur Veränderung der Stellung zumindest einer schwenkbeweglichen seitlichen Begrenzung, sowie zugehöriger Sensoren und Kontrolleinrichtungen, die die Stellung der seitlichen Begrenzung regeln,
**dadurch gekennzeichnet,**
**daß** die Steuervorrichtung aus einer elektronischen Steuervorrichtung (52) besteht mit einem Terminal (50) zur Vorgabe des Druck-Sollwertes im hydraulischen Stellmittel (18), einem Sensor (56) zur Messung des Ist-Drucks im hydraulischen Stellmittel (18), sowie einem PID-Regler der elektronischen Steuervorrichtung (52), der die Soll- und Ist-Druckwerte im hydraulischen Stellmittel (18) miteinander vergleicht und bei Abweichungen ein Regelsignal an ein hydraulisches Steuerventil (58, 100) zur Verringerung der Abweichung ausgibt.

2. Steuerung nach Anspruch 1,
**dadurch gekennzeichnet,**
**daß** das hydraulische Steuerventil (58) über Pulsweitenmodulation steuerbar ist.

3. Steuerung nach Anspruch 1 oder 2,
**dadurch gekennzeichnet,**
**daß** der Drucksensor (56) auf Werte zwischen 0 und 250 bar einstellbar ist.

4. Steuerung nach einem oder mehreren der Ansprüche 1 bis 3,
**dadurch gekennzeichnet,**
**daß** über das Terminal (50) Soll-Druckwerte zwischen 0 und 210 bar vorgebbar sind.

5. Steuerung nach einem oder mehreren der Ansprüche 1 bis 4,
**dadurch gekennzeichnet,**
**daß** für mehrere schwenkbewegliche Seitenwände mehrere hydraulische Stellmittel (18) von der elektronischen Steuervorrichtung (52) gesteuert werden.

6. Steuerung nach einem oder mehreren der Ansprüche 1 bis 5,
**dadurch gekennzeichnet,**
**daß** für mehrere schwenkbewegliche Seitenwände mehrere elektronische Steuervorrichtungen jeweils mindestens ein hydraulisches Stellmittel (52) steuern.

7. Steuerung nach einem oder mehreren der Ansprüche 1 bis 6,
**dadurch gekennzeichnet,**
**daß** die elektronische Steuervorrichtung (52) bei Übermittlung eines Überlastungssignals automatisch dem Preßdruck im hydraulischen Stellmittel (18) auf einen niedrigeren Druckwert regelt.

8. Steuerung nach einem oder mehreren der Ansprüche 1 bis 7,
**dadurch gekennzeichnet,**
**daß** an die Druckleitung (114) ein Druckspeicher (116) zur Dämpfung der Druckspitzen angeschlossen ist.

## Claims

1. A control arrangement for regulating the pressing force of a big bale press, comprising a pickup device, a feed passage, a pressing chamber with a pressing ram and lateral boundaries for the pressing chamber, hydraulic adjusting means for altering the position of at least one pivotably movable lateral boundary, and associated sensors and control devices which regulate the position of the lateral boundary,
**characterised in that** the control apparatus comprises an electronic control apparatus (52) with a terminal (50) for presetting the reference pressure value in the hydraulic adjusting means (18), a sensor (56) for measuring the actual pressure in the hydraulic adjusting means (18), and a PID controller of the electronic control apparatus (52) which compares together the reference and actual pressure values in the hydraulic adjusting means (18) and upon deviations outputs a regulating signal to a hydraulic control valve (58, 100) for reducing the deviation.

2. A control arrangement according to claim 1 **characterised in that** the hydraulic control valve (58) is controllable by way of pulse width modulation.

3. A control arrangement according to claim 1 or claim 2 **characterised in that** the pressure sensor (56) is adjustable to values of between 0 and 250 bars.

4. A control arrangement according to one or more of claims 1 to 3 **characterised in that** reference pressure values of between 0 and 210 bars can be predetermined by way of the terminal (50).

5. A control arrangement according to one or more of claims 1 to 4 **characterised in that** for a plurality of pivotably movable side walls a plurality of hydraulic adjusting means (18) are controlled by the electronic control apparatus (52).

6. A control arrangement according to one or more of claims 1 to 5 **characterised in that** for a plurality of pivotably movable side walls a plurality of electronic control apparatuses control at least one respective hydraulic adjusting means (52).

7. A control arrangement according to one or more of claims 1 to 6 **characterised in that** when an overload signal is transmitted the electronic control apparatus (52) automatically regulates the pressing pressure in the hydraulic adjusting means (18) to a lower pressure value.

8. A control arrangement according to one or more of claims 1 to 7 **characterised in that** a pressure storage means (116) is connected to the pressure line (114) for damping the pressure peaks.

## Revendications

1. Commande pour réguler la force de compression d'une presse à grandes balles, constituée d'un dispositif de ramassage, d'un canal d'alimentation, d'une chambre de compression avec un piston de compression et avec des moyens de délimitation latérale de la chambre de compression, de moyens hydrauliques d'actionnement pour modifier la position d'au moins un moyen de délimitation latérale pivotant, ainsi que de senseurs et de dispositifs de contrôle associés qui régulent la position du moyen de délimitation latérale, **caractérisée en ce que** le dispositif de commande est constitué d'un dispositif de commande électronique (52) avec un terminal (50) pour affecter une valeur de consigne de pression dans le moyen hydraulique d'actionnement (18), d'un senseur (56) pour mesurer la pression réelle dans le moyen hydraulique d'actionnement (18) et d'un régulateur PID du dispositif de commande électronique (52), lequel compare entre elles les valeurs de pression de consigne et réelle dans le moyen hydraulique d'actionnement (18) et, en présence d'un écart, envoie un signal de régulation à une valve de commande hydraulique (58, 100) pour réduire l'écart.

2. Commande selon la revendication 1, **caractérisée en ce que** la valve de commande hydraulique (58) est commandée par modulation d'impulsions en largeur.

3. Commande selon la revendication 1 ou 2, **caractérisée en ce que** le capteur de pression (56) peut être réglé à des valeurs comprises entre 0 et 250 bar.

4. Commande selon une ou plusieurs des revendications 1 à 3, **caractérisée en ce que** les valeurs de pression de consigne pouvant être affectées par l'intermédiaire du terminal (50) sont comprises entre 0 et 210 bar.

5. Commande selon une ou plusieurs des revendications 1 à 4, **caractérisée en ce que**, en présence de plusieurs parois latérales pivotantes, plusieurs moyens hydrauliques d'actionnement (18) sont commandés par le dispositif de commande électronique (52).

6. Commande selon une ou plusieurs des revendications 1 à 5, **caractérisée en ce que**, en présence de plusieurs parois latérales pivotantes, plusieurs dispositifs de commande électronique commandent chacun au moins un moyen hydraulique d'actionnement (52).

7. Commande selon une ou plusieurs des revendications 1 à 6, **caractérisée en ce que**, en cas de transmission d'un signal de surcharge, le dispositif de commande électronique (52) régule automatiquement la pression de compression dans le moyen hydraulique d'actionnement (18) à une valeur de pression inférieure.

8. Commande selon une ou plusieurs des revendications 1 à 7, **caractérisée en ce qu'**à la conduite de pression (114) est raccordé un accumulateur de pression (116) pour amortir les pics de pression.
